## Europäisches Patentamt
## European Patent Office
## Office européen des brevets

(11) Publication number: **0 275 788**
**A1**

# EUROPEAN PATENT APPLICATION

(21) Application number: **87402975.4**

(51) Int. Cl.4: **B65G 15/50**

(22) Date of filing: **23.12.87**

(30) Priority: **24.12.86 IT 2424286 U**

(43) Date of publication of application:
**27.07.88 Bulletin 88/30**

(84) Designated Contracting States:
**ES GR**

(71) Applicant: **MPA-Meccanizzazione Postale E Automazione SpA**
**Piane S. Atto Casella Postale 132**
**I-64020 Teramo(IT)**

(72) Inventor: **Scata, Mario**
**Via Fonte Bajano 74**
**Teramo(IT)**

(74) Representative: **Pothet, Jean Rémy Emile Ludovic et al**
**c/o SOSPI 14-16 rue de la Baume**
**F-75008 Paris(FR)**

(54) **Device for implementing curved paths in conveyor belt lines and the like.**

(57) A device for implementing curved paths in conveyor belt lines (2) and the like comprising:
- a fixed framework (7) and
- a plurality of belts (6) shidably guided with respect to the fixed framework (7), each along its longitudinal development, said belts (6) each developing according to closed line and having respective dragging sections parallely aligned according to a substantially horizontal flow plane which extends between the opposite ends of the framework, characterized in that it comprises, for each of said belts (6), at least one transmission member comprising:
- at least one supporting bracket fastenable to said framework (7);
- at least one first guide pulley and one second guide pulley revolvingly engaged at the upper part of the supporting bracket their axes being substantially horizontal and convergent with each other, and
- at least one trasmission pulley arranged below the guide pulleys and revolvingly engaged with the support bracket according to a substantially horizontal axis, the belt dragging section extending, in sequence, around the first guide pulley from the part facing the second guide pulley, around the transmission pulley along a lower portion of its circumference, and moreover around the second guide pulley from the part facing the first guide pulley.

FIG 1

## "DEVICE FOR IMPLEMENTING CURVED PATHS IN CONVEYOR BELT LINES AND THE LIKE".

The invention relates to a device for implementing curved paths in conveyor belt lines and the like. As it is known, the conveyor belt lines, widely used in several field of goods conveying and sorting in general, essentially consist of a plurality of conveyor belts reciprocally aligned and actuated in such a way to carry in a suitable manner the objects conveyed thereupon.

In many situations it is necessary to take care that the conveying line show a development comprising two or more consecutive rectilinear sections angled each other.

This necessity may occur, for istance, when, to obtain a good exploitation of the room, it results convenient to make the conveyor belt line to follow the perimetric development of the room in which it is installed.

It is evident that in these situations it is necessary to connect the paths of the rectilinear sections, angled each other, by means of devices which are able to make the carried objects to follow a curvilinear path.

To this end, at present, special conveyors consisting of a framework supporting at their ends two conical rollers between which extends a belt, whose plane development originates an annulus sector, are used. By means of conveyor belts of this type, it is possible to make the carried objects describe curvilinear paths.

However, it is to be realized that conveyor belts of this type involve very high realisation costs because of special workmanship necessary to achieve the desired belt structure. The realisation cost of these conveyor belts is also increased because it is not possible to implement different types of curve by using components of the same conveyor belt. In other words, for each type of curve it is necessary to realise components having different structural characteristics.

Devices comprising a plurality of chains which are suitably guided along curvilinear paths, have been realised too.

The devices of this kind, besides having a very complicated structure, are also very noisy during operation. In this situation, an object of the present invention is to provide a device, able to embody curved paths, which is a simple design and realisable at low cost.

Another object of the invention is to make such a device which is noiseless during operation.

Yet another object of the invention is to design the parts of the device in such a way that they can be used to realise curved path of any type by means of simple changes.

These and other objects, which will be better understood in the following description, are substantially achieved by a device for implementing curved paths in conveyor belt lines and the like comprising:
- a fixed framework and
- a plurality of belts slidably guided with respect to the fixed framework, each along its longitudinal development, said belts each developing according to a closed line and having respective dragging sections parallely aligned according to a substantially horizontal flow plane which extends between the opposite end of the framework, characterized in that it comprises, for each of said belts, at least one transmission member comprising:
- at least one supporting bracket fastenable to said framework;
- at least one first guide pulley and one second guide pulley revolvingly engaged at the upper part of the supporting bracket, their axes being substantially horizontal and convergent with each other, and
- at least one transmission pulley arranged below the guide pulleys and revolvingly engaged with the support bracket according to a substantially horizontal axis, the belt dragging section extending, in sequence, around the first guide pulley from the part facing the second guide pulley, around the transmission pulley along a lower portion of its circumference, and moreover around the second guide pulley from the part facing the first guide pulley.

Further characteristics and advantages will become more apparent from the detailed description of a preferred, but not exclusive, embodiment of a device for implementing curved paths in conveyor belt lines and the like according to the present invention, herein taken in conjunction with the accompanying drawings attached by way of an indicative and not limitative example in which:

- Fig. 1 shows, in a partial schematic plan view, a conveyor belt line comprising the device of the invention.

- Fig. 2 is a top view of the device according to the present invention.

- Fig. 3 shows, in a enlarged perspective view, a detail of the device of the invention.

With reference to the figures of the drawings, 1 stands generally for a device for implementing curved paths in conveyor belt lines and the like according to the present invention.

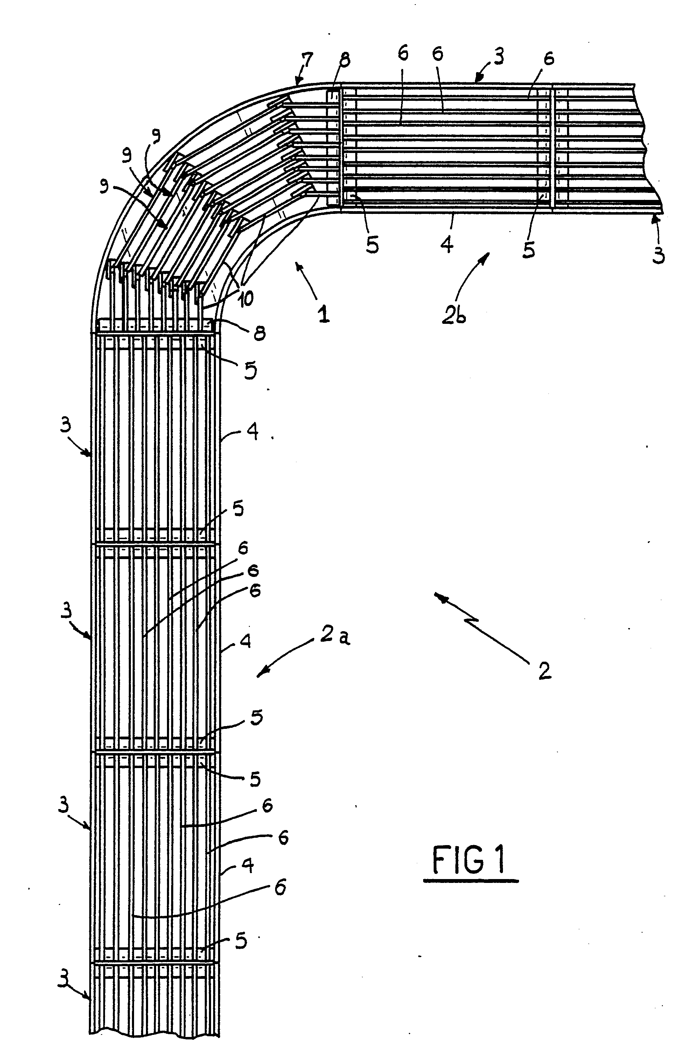

As it clearly appears from fig. 1, the device 1 is intended to be combined with a conveyor line 2 presenting a first rectilinear section 2a and a second rectilinear section 2b angled each other in such a way that the objects conveyed on line 2 are suitably transferred from the first rectilinear section 2a to the second rectilinear section 2b or viceversa.

In a way known per se, each rectilinear section 2a,2b substantially consists of a plurality of rectilinear conveyor belts 3 consecutively arranged in a reciprocal alignment.

In particular, in the illustrated embodiment, it is provided that the conveyor belts 3 are of the type comprising a fixed framework, at the respective ends of which two transmission rollers 5 are revolvingly engaged, a plurality of parallel belts 6 extending between them (5).

Each of conveyor belts 3 is operated, in a way known per se, by actuating means not shown and acting at one of the transmission roller 5. For istance, these actuating means may comprise a motor actuating one of the conveyor belts 3, the motion of this latter being transmitted from one conveyor belt to the next one by driving belts.

The objects conveyed on the line 2 can be therefore transferred from one conveyor belt 3 to another by translating along a substantially horizontal flow plane formed by the dragging sections of the belts 6.

In a way known per se, the device 1 comprises a fixed framework 7 which has a substantially curvilinear development. At the opposite ends of the framework 7 two transmission rollers 8 are revolvingly engaged. A plurality of belts 9 each of which develops along a closed line and it is slidably guided with respect to the framework extending from a transmission roller 8 to the other, are also provided. The belts 9 extend parallel each other in such a way to form, at each of their dragging section 10, a sliding plane along which the objects conveyed on line 2 are translated.

To this end the device 1 is located between the rectilinear sections 2a and 2b in such a way to have their sliding plane flush with the sliding planes of conveyor belts 3, and their transmission rollers 8 parallely located alongside of the transmission rollers 5 of the conveyor belts 3 adjacent to device 1 itself.

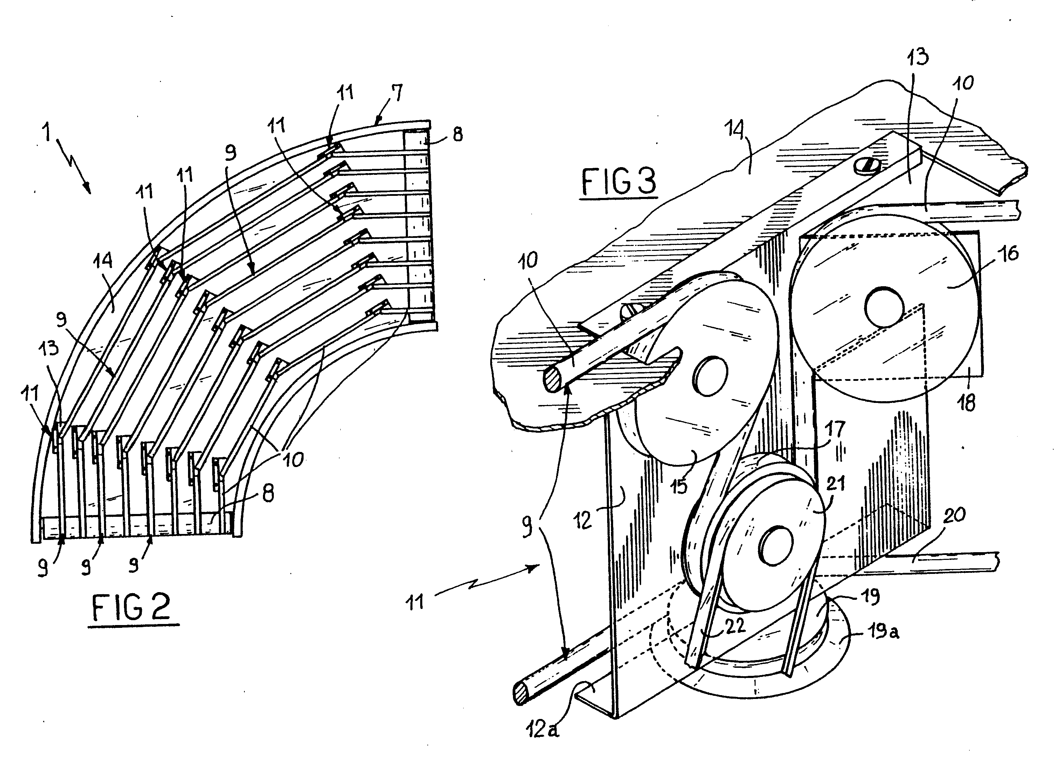

According to the invention, and in an original way, the device 1 further comprises a plurality of transmission members 11 placed along the dragging sections 10 of the belts 9. In particular, to each belt 9 there is associated at least one transmission member 11, operating in such a way to give the belt dragging section 10 a broken line development. In fact, with reference to fig. 3, each transmission member 11 comprises at least one supporting bracket 12 fastenable to framework 7. In the illustrated embodiment the bracket 12 is fastened to the framework 7, for istance by means of threaded members, at an opening 13 formed in a supporting plate 14 provided in the framework and extending along the above mentioned flow plane to support the belts 9 at their dragging sections 10. The bracket 12, preferably made of stamped plate or similar material, extends substantially in a vertical direction at the bottom of the plate 14 and revolvingly engages, along substantially horizontal axes, a first guide pulley 15 and a second guide pulley 16 arranged at the top of the bracket. Below the guide pulleys 15,16 there is arranged a transmission pulley 17 pivoted to the bracket 12 along a substantially horizontal axis.

As can be seen in fig. 3, the dragging section 10 of each belt is designed to wind, in sequence, the first guide pulley 15 from its portion facing the second guide pulley 16, the transmission pulley 17 along a lower portion of its circumferential development, and even the second guide pulley 16 from its portion facing the first guide pulley 15.

Advantageously the axes of the guide pulleys 15,16 are made convergent with each other, so that the dragging section 10, going through the member 11 in the abovedescribed manner, is diverted with a predetermined angle. To this end at least one of the guide pulleys, the second one 16 in the shown embodiment, is advantageously revolvingly engaged on an orientable element 18 which can be suitably rotated in a wished direction. In particular, the element 18 is advantageously made revolvingly orientable around an axis which substantially coincides with the longitudinal axis of the belt section 9 which extends between the transmission pulley 17 and the second guide pulley 16. In the illustrated embodiment this feature is substantially achieved by constructing the orientable element 18 like a tab directly formed in the supporting bracket 12 by means of two notchings.

In a preferred embodiment the transmission member 11 is also provided with an auxiliary pulley 19 revolvingly engaged with the bracket at the bottom with respect to the transmission pulley in order to suitably guide a return section of the belt 9 extending from a transmission roller 8 to the other beneath the plate 14. In the illustrated embodiment the auxiliary pulley 19 is pivoted around a vertical axis at a tab 12a formed at the bottom of the bracket 12 and it is provided with a cap 19a arranged at the bottom to prevent the return section 20 from leaving the pulley 19.

As shown in fig. 3, a drawing pulley 21 connected by means of a transmission belt 22, partially shown, to actuating means (not shown) to actuate the device 1, can be associated with the transmission pulley 17.

After all what described above no further details are necessary to illustrate the operation of the device of the invention. Such an operation, in fact, substantially is not so different from the known conveyor belts operation. The conveyed objects on the conveyor line 2, in fact, are intended to be supported by the dragging sections of belts 9, and carried by them according to the trajectory of their longitudinal development.

Advantageously the presence of transmission members 11 makes this longitudinal development follow a substantially curvilinear trajectory consisting of several consecutive rectilinear and angled sections. Obviously the number of these curvilinear sections depends on the number of transmission members 11 used for each belt, which number is selected according to the type of curve to be realised.

The present invention fully achieves the proposed objects.

In fact, the device according to the invention is fit for the realisation of curved paths at very low costs with respect to costs involved in known devices. This is particularly due to the simple structure of the device according to the invention, realisable by means of items easy to trace on the market.

Further, it should be born in mind that the components of the device 1, and particularly the transmission members 11, can be used to implement curves of any type. In other words, the manufacturing of items of different structure to implement devices 1 having a different curvature or a different size is not necessary. In fact, each transmission member 11 can be easily fit as occasion may require, merely by orienting in a suitable manner the element 18 which supports the second guide pulley 16.

The possibility to exploit the transmission member fitness to different requirements allows, if necessary, to modify the structure of framework 7 for instance to shorten it by means of simple cutting operations should the path of conveying line 2 be modified.

The use of pulley guided belts also eliminates the noise drawbacks which occur with known devices using guided chains, while by conveniently selecting material, cross section and number of belts it is possible to realise systems cheaper than those using friction rollers.

Naturally numerous modifications and variations can be applied to the present invention, all falling within the protective sphere which characterizes the same.

## Claims

1) A device for implementing curved paths in conveyor belt lines and the like, comprising:
- a fixed framework and
- a plurality of belts slidably guided with respect to the fixed framework, each along its longitudinal development, said belts each developing according to a closed line and having respective dragging sections parallely aligned according to a substantially horizontal flow plane which extends between the opposite ends of the framework, characterized in that it comprises, for each of said belts, at least one transmission member comprising:
- at least one supporting bracket fastenable to said framework;
- at least one first guide pulley and one second guide pulley revolvingly engaged at the upper part of the supporting bracket, their axes being substantially horizontal and convergent with each other, and
- at least one transmission pulley arranged below the guide pulleys and revolvingly engaged with the support bracket according to a substantially horizontal axis, the belt dragging section extending, in sequence, around the first guide pulley from the part facing the second guide pulley, around the transmission pulley along a lower portion of its circumference, and moreover around the second guide pulley from the part facing the first guide pulley.

2) A device according to claim 1, characterized in that at least one of said guide pulleys is revolvingly engaged on an orientable element which is rigidly fixed to the supporting bracket and orientable around an axis which substantially coincides with the longitudinal development axis of the belt section which extends between the transmission pulley and the guide pulley itself.

3) A device according to claim 2, characterized in that said orientable element consists of a tab formed in said supporting bracket, this latter being made of stamped plate.

4) A device according to claim 1, characterized in that each of said transmission members further comprises at least one auxiliary pulley revolvingly engaged on the supporting bracket below the transmission pulley.

5) A device according to claim 1, characterized in that a driving pulley, kinematically connected with actuating means by a transmission belt, is coaxially associated with said transmission pulley.

6) A device according to claim 1, characterized in that said transmission members are fastened at openings formed in a supporting plate provided in the framework and extending along the flow plane to support said belts at their dragging sections.

FIG 1

0 275 788

FIG 2

FIG 3

0 275 788

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 230 204 (J. LYONS)<br>* Whole document * | 1,4,5 | B 65 G 15/50 |
| Y | | 6 | |
| A | | 2,3 | |
| | --- | | |
| Y | GB-A-2 067 494 (TURKINGTON)<br>* Figures 1,2; page 1, line 96 – page 2, line 99 * | 6 | |
| A | | 1-5 | |
| | ----- | | |

TECHNICAL FIELDS
SEARCHED (Int. Cl.4)

B 65 G

The present search report has been drawn up for all claims

| Place of search | Date of completion of the search | Examiner |
|---|---|---|
| THE HAGUE | 23-03-1988 | WERNER D.M. |